# EUROPÄISCHE PATENTANMELDUNG

(11) **EP 3 021 025 A1**
(43) Veröffentlichungstag der Anmeldung: **18.05.2016**
(21) Anmeldenummer: 14192892.9
(22) Anmeldetag: 12.11.2014
(51) Int. Cl.: F16L 11/08, F16L 11/16, F16L 11/24

(54) **Schlauch und Verfahren zur Herstellung eines Schlauches**

(71) Anmelder: MC Treuhand- und Projektmanagement AG, 6304 Zug (CH)
(72) Erfinder: Skowronek, Roland, 47906 Kempen (DE); Huppertz, Ralf, 41751 Viersen (DE); Dedemadis, Nikolaos, 12242 Athen (GR)
(74) Vertreter: DR. STARK & PARTNER

(57) **Zusammenfassung**

Die Erfindung betrifft einen Schlauch (1) aus einem Elastomer und/oder Thermoplast mit einem biegsamen und nachgiebigen Schlauchhauptkörper (2), mit einer ersten schraubenförmig verlaufenden Verstärkungseinrichtung (3), die teilweise oder vollständig in den Schlauchhauptkörper eingebettet ist. Um einen Schlauch (1) anzugeben, der zum einen gut gegen Beschädigungen geschützt ist, jedoch andererseits unverändert ausreichend flexibel und gut handhabbar ist, soll zumindest eine weitere schraubenförmig verlaufende Verstärkungseinrichtung (4) vorgesehen sein, die teilweise oder vollständig in den Schlauchhauptkörper (2) eingebettet ist, wobei zumindest zwei der vorgesehenen Verstärkungseinrichtungen (3, 4) in unterschiedlichen radialen Ebenen, die einander radial maximal partiell überlagern, angeordnet sind, wobei das Material der Verstärkungseinrichtungen (3, 4) in einem geringeren Maße biegsam und nachgiebig ist als das Material des Schlauchhauptkörpers (2), und wobei jeweils zwei benachbart vorgesehene Verstärkungseinrichtungen (3, 4) derart axial versetzt zueinander angeordnet sind, dass zwischen ihren radialen Projektionen maximal ein axialer Abstand, der geringer ist als der kleinere Durchmesser dieser beiden Verstärkungseinrichtungen (3, 4), verbleibt.

## Beschreibung

Die Erfindung betrifft einen Schlauch aus einem Elastomer, und/oder Thermoplast insbesondere Saug- und/oder Druckschlauch, mit einem biegsamen und nachgiebigen Schlauchhauptkörper, mit einer ersten schraubenförmig verlaufenden Verstärkungseinrichtung, die teilweise oder vollständig in den Schlauchhauptkörper eingebettet ist.

Aus der Praxis sind derartige Schläuche bekannt, die in verschiedenen Ausprägungen hergestellt und verwendet werden.

Nachteilig hierbei ist, dass zwischen den nebeneinander liegenden jeweiligen Bereichen (Spiralsteigungen) der Stützspiralen jeweils ein solcher weicher, sehr nachgiebiger Zwischenbereich ohne Stützspirale verbleibt, so dass bei Auftreffen von flachen und/oder spitzen Gegenständen eine Art Durchschneiden/Durchstechen dieses "ungeschützten" Bereiches des weichen Schlauchhauptkörpers erfolgen kann und der Schlauch dadurch unbrauchbar wird.

Zudem hat die Stützspirale häufig einen solchen Materialquerschnitt, dass die Stützspirale annähernd der gesamten Stärke des Schlauchhauptkörpers entspricht, was dazu führt, das bei einem Bruch der Stützspirale durch hohe Belastung von außen der gesamte Schlauch unbrauchbar wird.

Zudem kann ein Schlauch, der eine Stützspirale besitzt, die der gesamten Stärke des Schlauchhauptkörpers entspricht, nicht mehr mittels handelsüblicher Befestigungshilfsmittel so dicht auf Schlauchstutzen befestigt werden, dass bei Überdruck kein Medium entweicht, weil handelsübliche Befestigungsmittel bei dieser Konstruktion nur auf die unnachgiebige Stützspirale drücken, ohne das nachgiebige Thermoplast des Schlauchhauptkörpers zu pressen.

Auch muss das Material des Schlauchhauptkörpers für eine hohe Vakuumbelastbarkeit entweder relativ hart oder mit sehr viel mehr Masse ausgebildet werden, da ansonsten der jeweils zwischen den Bereichen (Spiralsteigungen) der Stützspiralen befindliche Zwischenbereich nicht ausreichend stabil ist bzw. je nach Höhe und Dauer des Vakuums sehr stark komprimiert wird und nicht mehr seine Ursprungsform erreicht. Durch eine härtere Materialmischung des Materials des Schlauchhauptkörpers wird der Schlauch jedoch nicht nur weniger flexibel, sondern durch mehr Materialmasse wird der Schlauch als solcher auch schwerer und damit viel teurer.

Aufgabe der Erfindung ist es, die vorgenannten Nachteile zu vermeiden und einen Schlauch anzugeben, der zum einen gut gegen Beschädigungen geschützt ist, jedoch andererseits unverändert ausreichend flexibel, gut handhabbar und sehr hoch vakuumbelastbar ist.

Diese Aufgabe wird dadurch gelöst, dass zumindest eine weitere schraubenförmig verlaufende Verstärkungseinrichtung vorgesehen ist, die teilweise oder vollständig in den Schlauchhauptkörper eingebettet ist, wobei zumindest zwei der vorgesehenen Verstärkungseinrichtungen in unterschiedlichen radialen Ebenen, die einander radial maximal partiell überlagern, angeordnet sind, wobei das Material der Verstärkungseinrichtungen in einem geringeren Maße biegsam und nachgiebig ist als das Material des Schlauchhauptkörpers, und wobei jeweils zwei benachbart vorgesehene Verstärkungseinrichtungen derart axial versetzt zueinander angeordnet sind, dass zwischen ihren radialen Projektionen maximal ein axialer Abstand, der geringer ist als der kleinere Durchmesser dieser beiden Verstärkungseinrichtungen, verbleibt.

Unter dem Begriff "Ebene" wird hier und nachfolgend jeweils ein radialer Bereich verstanden, in dem die jeweilige Verstärkungseinrichtung liegt.

Hierdurch sind in dem Schlauchmaterial ausreichend vorhandene und gut verteilte Bereiche der Verstärkungseinrichtungen vorgesehen, so dass keine so derart großen Lücken zwischen den Verstärkungseinrichtungen verbleiben, dass es bei Auftreffen von flachen und/oder spitzen Gegenständen zu einer Art Durchschneiden/Durchstechen dieses "ungeschützten" Bereiches des weichen Schlauchhauptkörpers kommen kann.

Vorzugsweise können jeweils zwei benachbart vorgesehene Verstärkungseinrichtungen derart axial zueinander angeordnet sein, dass zwischen ihren radialen Projektionen kein axialer Abstand verbleibt, insbesondere zumindest eine geringe, jedoch weniger als vollständige, axiale Überlappung der radialen Projektionen gegeben ist. Hierdurch werden die erfindungsgemäß verbesserten technischen Eigenschaften nochmals optimiert.

Erfindungsgemäß können zumindest zwei der vorgesehenen Verstärkungseinrichtungen übereinstimmende Querschnittflächen aufweisen, so dass gleichmäßigere technische Daten entlang des Verlaufs des Schlauchs resultieren.

Auch können hierfür zumindest zwei Verstärkungseinrichtungen, insbesondere sämtliche Verstärkungseinrichtungen, aus demselben Material bestehen. Insbesondere können durch Verwendung mehrerer identischer Verstärkungseinrichtungen Einsparpotenziale bis hin zu einer vereinfachten Lagerhaltung bei der Herstellung resultieren.

Bei einem bevorzugten Ausführungsbeispiel der Erfindung kann zumindest eine Verstärkungseinrichtung, insbesondere können mehrere oder sämtliche Verstärkungseinrichtungen, vollständig im Material des Schlauchhauptkörpers eingeschlossen sein. Durch die Verwendung von mindestens 2 axial getrennt voneinander im Schlauchhauptkörper eingebetteten starren Verstärkungseinrichtungen wird bei Anschluss des Schlauchs mittels einer Schlauchschelle an einem Stutzen mit geriffelter Struktur eine Dichtigkeit unter Druck gut möglich, da somit ausreichend elastisches Material zwischen der insbesondere oberen Verstärkungseinrichtung und der Struktur des Stutzen befindlich ist, welches sich in die Vertiefungen der Struktur hineindrücken und damit den Schlauch gegenüber dem Stutzen abdichten kann.

Erfindungsgemäß kann zumindest eine, insbesondere jede Verstärkungseinrichtung, aus einem über den Querschnitt einheitlichem Material einstückig ausgebildet sein, wodurch gleichmäßigere technische Werte der Verstärkungseinrichtung resultieren.

Vorzugsweise kann zumindest eine, insbesondere jede Verstärkungseinrichtung, aus Hart-PVC bestehen. Auch kann zumindest eine, insbesondere jede Verstärkungseinrichtung, eine Härte von ca. 35 bis 90 Shore-D haben. Weiterhin kann der Schlauchhauptkörper eine Härte von ca. 35 bis 98 Shore-A haben.

Bei einem bevorzugten Ausführungsbeispiel der Erfindung kann zumindest eine, insbesondere jede Verstärkungseinrichtung, einen kreisrunden oder einseitig abgeflachten kreisrunden Querschnitt aufweisen, wodurch eine besonders gute Stabilität der Verstärkungseinrichtung resultiert und nachteilige Effekte auf den Schlauchhauptkörper durch evtl. scharfkantige Bereiche vermieden werden.

Die Erfindung betrifft weiterhin ein Verfahren zur Herstellung eines erfindungsgemäßen Schlauches. Zur Vermeidung der eingangs genannten Nachteile soll der Schlauch hergestellt werden, indem
- entweder zumindest ein extrudiertes Endlosprofil in heißem Zustand auf einem starren Rohr mit rotierenden Wellen einlagig wendelförmig aufgewickelt und dann die aneinander anliegenden Bereiche des Endlosprofils entlang ihrer Berührfläche miteinander verschweißt werden, wobei das Endlosprofil zumindest zwei axial verschieden positionierte Verstärkungseinrichtungen aufweist und der Querschnitt des Endlosprofils sowie die Größe und Lage der Verstärkungseinrichtungen so aufeinander abgestimmt sind, dass zwischen benachbarten radialen Projektionen der Verstärkungseinrichtungen maximal ein axialer Abstand verbleibt, der geringer ist als der kleinere Durchmesser der beiden zugehörigen Verstärkungseinrichtungen,
- oder aber zumindest zwei extrudierte Endlosprofile, in denen jeweils zumindest eine Verstärkungseinrichtung integriert ist, in heißem Zustand mehrlagig auf einem starren Rohr mit rotierenden Wellen jeweils wendeiförmig aufgewickelt und die aneinander anliegenden Bereiche der Endlosprofile entlang ihrer jeweiligen Berührflächen miteinander verschweißt werden, wobei der jeweilige Querschnitt der Endlosprofile sowie die Größe und Lage der jeweiligen Verstärkungseinrichtungen so aufeinander abgestimmt sind, dass zwischen benachbarten radialen Projektionen der Verstärkungseinrichtungen maximal ein axialer Abstand verbleibt, der geringer ist als der kleinere Durchmesser der beiden zugehörigen Verstärkungseinrichtungen.

Sofern die Endlosprofile mehrlagig aufgewickelt werden, liegt die jeweils höhere Lagen nicht auf dem Rohr mit den rotierenden Wellen, sondern auf der jeweils vorherigen Lage des davor aufgesetzten Endlosprofils auf. Bei mehrlagigem, jeweils versetzt übereinander vorgesehenem Aufwickeln ist aufgrund der Überlappung zudem eine verbesserte Andruckfestigkeit gegeben.

Vorzugsweise kann die Anzahl der Lagen, in denen die extrudierten Endlosprofile in heißem Zustand mehrlagig auf einem starren Rohr mit rotierenden Wellen jeweils wendelförmig aufgewickelt werden, der Anzahl der Endlosprofile entsprechen, so dass jede Lage lediglich durch ein Endlosprofil gebildet wird. Es sind aber auch mehrere nebeneinander verlaufende Endlosprofile in einer Lage möglich.

Erfindungsgemäß können das bzw. die Endlosprofile von wenigstens einer Lage einen Querschnitt in Form eines seitlich geneigten Parallelogramms aufweisen, so dass eine größere Kontaktfläche zwischen den aneinander anliegenden Bereichen des Endlosprofils bzw. der Endlosprofile gegeben ist.

Vorzugsweise kann das Endlosprofil bzw. können die Endlosprofile nach erfolgtem wendelförmigen Aufwickeln auf der rotierenden Welle durch eine Andruckwalze angedrückt werden, wodurch eine verbesserte Verbindung resultiert. Bei einem Querschnitt des Endlosprofils der Endlosprofile in Form eines seitlich geneigten Parallelogramms resultiert zudem eine verstärkte Anpressung der jeweiligen seitlich Kontaktflächen.

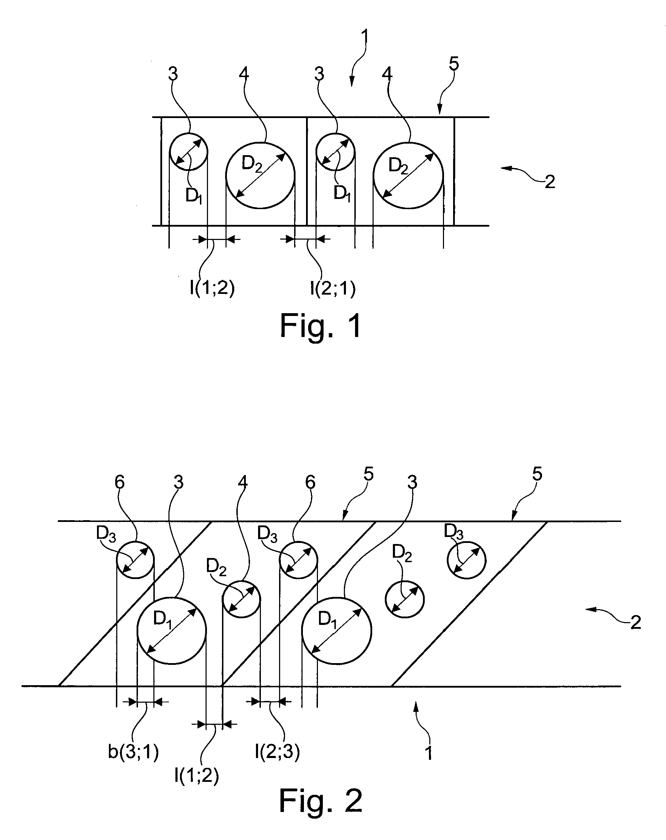

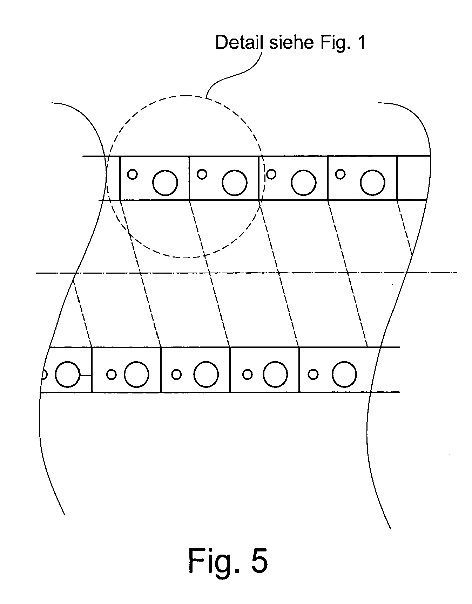

Im Folgenden werden in der Zeichnung dargestellte Ausführungsbeispiele der Erfindung erläutert. Die Figuren 1 bis 4 und 6 bis 9 zeigen Schnittdarstellungen von vier verschiedenen Ausführungsbeispielen eines erfindungsgemäßen Schlauches, wobei jeweils nur die obere Wandung des Schlauches dargestellt ist. Fig. 5 zeigt der Deutlichkeit halber eine Schnittdarstellung eines vollständigen Schlauchabschnittes des Gegenstands gemäß Fig. 1.

In allen Figuren werden für gleiche bzw. gleichartige Bauteile übereinstimmende Bezugszeichen verwendet.

Fig. 1 zeigt einen Schlauch 1, der einen biegsamen und nachgiebigen Schlauchhauptkörper 2 aufweist. In der Zeichnung ist nur die obere Wandung des Schlauchhauptkörpers 2 dargestellt. Der Schlauchhauptkörper 2 ist mit einer ersten schraubenförmig verlaufenden Verstärkungseinrichtung 3 versehen, die vollständig in den Schlauchhauptkörper 2 eingebettet ist. Darüber hinaus ist eine weitere schraubenförmig verlaufende Verstärkungseinrichtung 4 vorgesehen ist, die ebenfalls vollständig in den weichen Schlauchhauptkörper 2 eingebettet ist. Die erste Verstärkungseinrichtung 3 weist dabei einen Durchmesser D1 auf, und die zweite Verstärkungseinrichtung 4 hat einen Durchmesser D2. Das Material der Verstärkungseinrichtungen 3, 4 ist in einem geringeren Maße biegsam und nachgiebig als das Material des Schlauchhauptkörpers 2.

Die beiden Verstärkungseinrichtungen 3, 4 sind in unterschiedlichen radialen Ebenen vorgesehen, wobei diese radialen Ebenen einander radial teilweise überlagern.

Dieser Schlauch 1 wird hergestellt, indem ein extrudiertes Endlosprofil 5, in welchem die beiden Verstärkungseinrichtungen 3, 4 integriert sind, in heißem Zustand einlagig auf einer in der Zeichnung nicht dargestellten rotierenden Welle wendeiförmig aufgewickelt wird, so dass dann die aneinander anliegenden Bereiche des Endlosprofils 5 entlang ihrer Berührfläche miteinander verschweißt werden.

Der quaderförmige Querschnitt des Endlosprofils 5 sowie die Größe und Lage der beiden Verstärkungseinrichtungen 3, 4 sind dabei so aufeinander abgestimmt, dass zwischen benachbarten radialen Projektionen der beiden Verstärkungseinrichtungen 3, 4 maximal ein axialer Abstand I(1; 2) bzw. I(2; 1) verbleibt, der geringer ist als der kleinere Durchmesser, hier D1, dieser beiden Verstärkungseinrichtungen 3, 4. Dabei ist der Abstand I(1; 2) der Abstand der beiden Verstärkungseinrichtungen 3, 4 innerhalb eines Bereiches des Endlosprofils 5, wohingegen der Abstand I(2; 1) der Abstand von der radialen Projektion der weiteren Verstärkungseinrichtung 4 in einem Bereich des Endlosprofils 5 zu der ersten Verstärkungseinrichtung 3 in dem nächsten Bereich des Endlosprofils 5 ist.

Fig. 2 zeigt einen Schlauch 1, ebenfalls bestehend aus einem wendeiförmig gewickelten Endlosprofil 5, wobei hier der Querschnitt des Endlosprofils 5 ein Parallelogramm ist und insgesamt drei Verstärkungseinrichtungen 3, 4 und 6 in dem Endlosprofil 5 vorgesehen sind. Dabei weisen die beiden Verstärkungseinrichtungen 4 und 6 übereinstimmende Querschnittflächen auf.

Die beiden Verstärkungseinrichtungen 3, 4 sind in solchen radialen Ebenen vorgesehen, die einander radial teilweise überlagern, wohingegen die Verstärkungseinrichtungen 4 und 6 in einander nicht überlagernden, aber aneinander angrenzenden Ebenen vorgesehen sind. Die Ebenen der Verstärkungseinrichtungen 3 und 6 weisen zueinander einen Abstand auf.

Der Parallelogramm förmige Querschnitt des Endlosprofils 5 sowie die Größe und Lage der drei Verstärkungseinrichtungen 3, 4 und 6 sind dabei so aufeinander abgestimmt, dass zum einen zwischen den radialen Projektionen der Verstärkungseinrichtungen 3, 4 ein axialer Abstand I(1; 2) verbleibt, der geringer ist als der kleinere Durchmesser, hier D2, dieser beiden Verstärkungseinrichtungen 3, 4, und zum anderen zwischen den radialen Projektionen der Verstärkungseinrichtungen 4 und 6 ein axialer Abstand I(2; 3) verbleibt, der geringer ist als der kleinere Durchmesser, hier D2=D3, dieser beiden Verstärkungseinrichtungen 4 und 6.

In Fig. 2 sind die Abstände I(1; 2) und I(2; 3) die Abstände der Verstärkungseinrichtungen 3, 4 bzw. 4, 6 innerhalb eines Bereiches des Endlosprofils 5, wohingegen der Abstand I(3; 1) der Abstand von der radialen Projektion der Verstärkungseinrichtung 6 in einem Bereich des Endlosprofils 5 zu der ersten Verstärkungseinrichtung 3 in dem nächsten Bereich des Endlosprofils 5 ist.

Dabei sind die benachbart vorgesehenen Verstärkungseinrichtungen 6 und 3 axial zueinander derart angeordnet, dass zwischen der radialen Projektion der Verstärkungseinrichtung 6 in einem Bereich des Endlosprofils 5 und der radialen Projektion der Verstärkungseinrichtung 3 in dem nächsten Bereich des Endlosprofils 5 kein axialer Abstand verbleibt, sondern stattdessen eine teilweise axiale Überlappung b(3; 1) der radialen Projektionen gegeben ist.

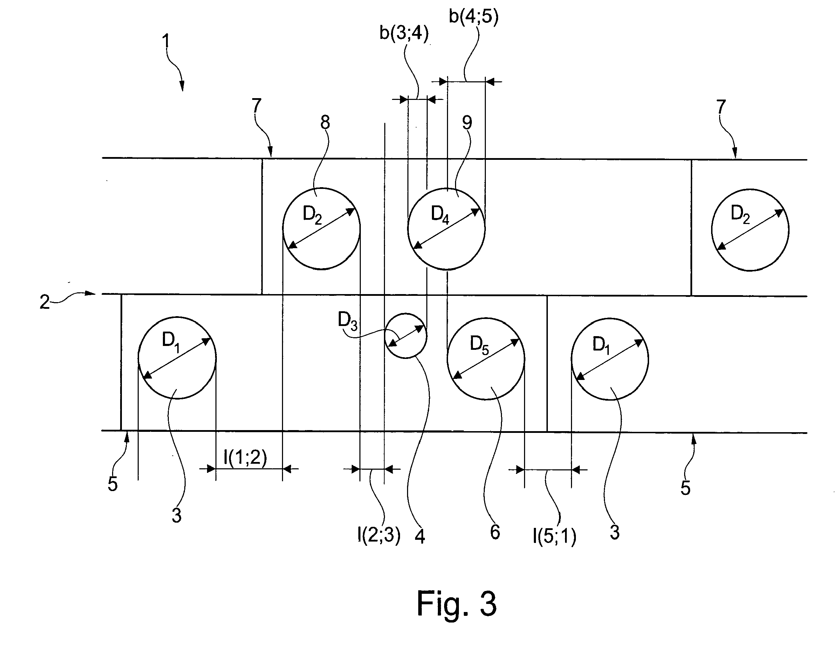

In Fig. 3 ist ein Ausführungsbeispiel gezeigt, bei dem zwei extrudierte Endlosprofile 5 und 7 vorgesehen sind. In dem inneren Endlosprofil 5 sind drei Verstärkungseinrichtungen 3, 4 und 6 vorgesehen, von denen die Verstärkungseinrichtungen 3 und 6 identische Querschnitte haben und auf identischen radialen Ebenen liegen.

In dem äußeren Endlosprofil 7 sind zwei Verstärkungseinrichtungen 8 und 9 vorgesehen, die identische Querschnitte haben und auf identischen radialen Ebenen liegen.

Die parallelogrammförmigen Endlosprofile 5 und 7 werden in heißem Zustand mehrlagig axial versetzt auf einer rotierenden Welle jeweils wendeiförmig aufgewickelt, und die aneinander anliegenden Bereiche der Endlosprofile 5, 7 werden somit entlang ihrer jeweiligen Berührflächen miteinander verschweißt.

Bei diesem Ausführungsbeispiel sind der jeweilige Querschnitt der Endlosprofile 5 und 7 sowie die Größe und die Lage der jeweiligen Verstärkungseinrichtungen 3, 4, 6, 8 und 9 so aufeinander abgestimmt, dass zwischen benachbarten radialen Projektionen der Verstärkungseinrichtungen 3, 4, 6, 8 und 9 der beiden Endlosprofile 5 und 7 jeweils nur ein axialer Abstand verbleibt, der geringer ist als der kleinere Durchmesser der beiden zugehörigen Verstärkungseinrichtungen.

Insoweit sind die benachbart vorgesehenen Verstärkungseinrichtungen 3 und 8 axial zueinander derart angeordnet, dass zwischen ihren radialen Projektionen nur ein axialer Abstand I(1; 2) verbleibt, der geringer ist als der Durchmesser, hier D1=D2, dieser beiden Verstärkungseinrichtungen 3 und 8.

Auch sind die benachbart vorgesehenen Verstärkungseinrichtungen 8 und 4 axial zueinander derart angeordnet, dass zwischen ihren radialen Projektionen nur ein axialer Abstand I(2; 3) verbleibt, der geringer ist als der kleinere Durchmesser, hier D3, dieser beiden Verstärkungseinrichtungen 8 und 4.

Hinsichtlich der radialen Projektionen der Verstärkungseinrichtungen 4 und 9 sowie 9 und 6 ist kein axialer Abstand vorhanden, sondern stattdessen eine teilweise axiale Überlappung b(3; 4) bzw. b(4; 5) der jeweiligen radialen Projektionen gegeben.

Bei den Verstärkungseinrichtungen 6 und 3 ist zwischen der radialen Projektion der Verstärkungseinrichtung 6 in einem Bereich des Endlosprofils 5 und der radialen Projektion der Verstärkungseinrichtung 3 in dem nächsten Bereich des Endlosprofils 5 kein axialer Abstand, sondern stattdessen ist eine teilweise axiale Überlappung b(3; 1) der radialen Projektionen gegeben.

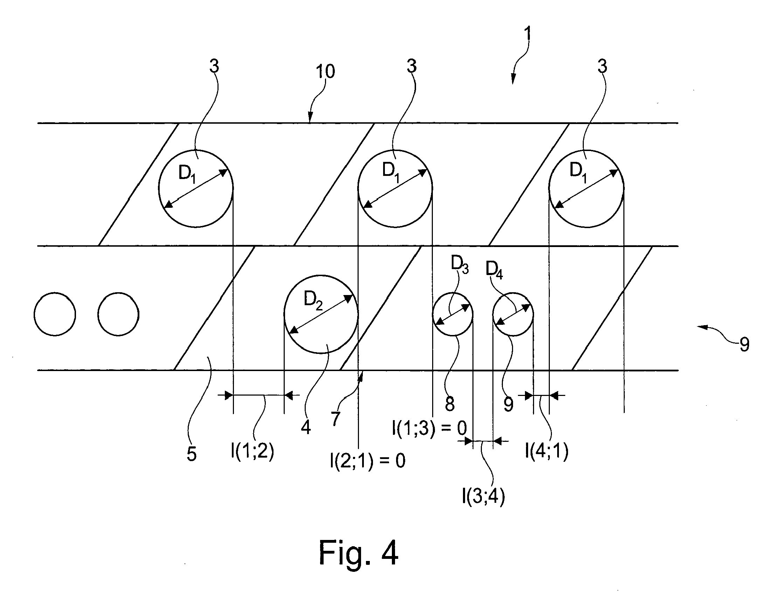

In Fig. 4 ist ein weiteres Ausführungsbeispiel dargestellt, bei dem insgesamt drei extrudierte Endlosprofile 5, 7 und 10 vorgesehen sind. In der inneren Lage sind die beiden Endlosprofile 5 und 7 abwechselnd vorgesehen, wohingegen in der äußeren Lage lediglich ein Endlosprofil 10 angeordnet ist. Somit muss die Extrudiergeschwindigkeit bei dem Endlosprofil 10 doppelt so hoch sein wie bei den Endlosprofilen 5 und 7. Alternativ können auch zwei identische Endlosprofile 10 eingesetzt werden, so dass eine einheitliche Extrudiergeschwindigkeit für alle Endlosprofile möglich ist.

In dem inneren Endlosprofil 7 sind zwei Verstärkungseinrichtungen 8 und 9 vorgesehen, die identische Querschnitte haben und auf identischen radialen Ebenen liegen.

In dem inneren Endlosprofil 5 sowie dem äußeren Endlosprofil 10 sind jeweils nur eine Verstärkungseinrichtung 4 bzw. 3 vorgesehen.

Die quaderförmigen Endlosprofile 5, 7 und 10 werden in heißem Zustand mehrlagig auf einer rotierenden Welle jeweils wendeiförmig aufgewickelt, und die aneinander anliegenden Bereiche der Endlosprofile 5, 7 und 10 entlang ihrer jeweiligen Berührflächen werden somit miteinander verschweißt.

Dabei sind die benachbart vorgesehenen Verstärkungseinrichtungen 8 und 9 in dem Endlosprofil 7 axial zueinander derart angeordnet, dass zwischen ihren radialen Projektionen nur ein axialer Abstand I(3; 4) verbleibt, der geringer ist als der Durchmesser D3=D4 dieser beiden Verstärkungseinrichtungen 8 und 9.

Bei den Verstärkungseinrichtungen 4 und 3 sowie 3 und 8 ist zwischen der radialen Projektion dieser jeweiligen Verstärkungseinrichtungen kein axialer Abstand gegeben, sondern die Projektionen grenzen direkt aneinander an.

Bei den benachbart vorgesehenen Verstärkungseinrichtungen 3 und 4 ist zwischen ihren radialen Projektionen nur ein axialer Abstand I(1; 2), der geringer ist als der Durchmesser D1=D2 dieser beiden Verstärkungseinrichtungen 3 und 4.

Fig. 5 zeigt der Deutlichkeit halber eine Schnittdarstellung des vollständigen Schlauchs gemäß Fig. 1, wobei der eingekreiste Bereich die Darstellung gemäß Fig. 1 bildet.

Sämtliche in den Figuren gezeigten Verstärkungseinrichtungen haben einen kreisförmigen Querschnitt, es sind jedoch auch abweichende Querschnitte möglich.

Auch können die Verstärkungseinrichtungen teilweise aus dem Schlauchhauptkörper herausragend vorgesehen sein, und zwar innenseitig und/oder außenseitig.

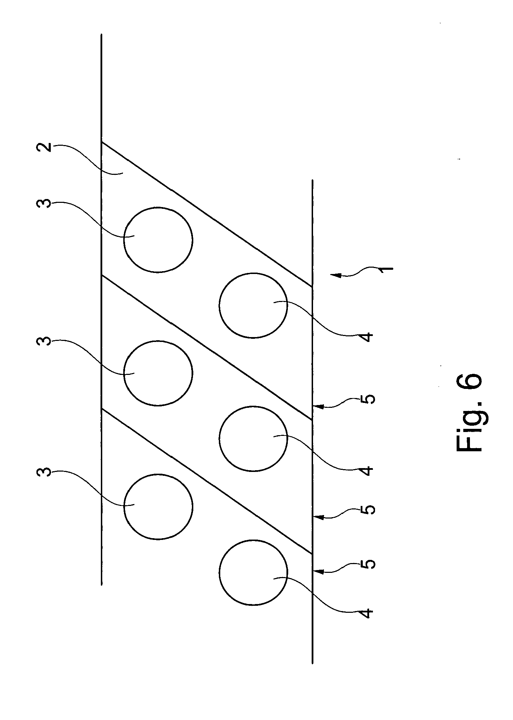

In Fig. 6 ist ein Ausführungsbeispiel gezeigt, bei dem der Schlauch 1 ebenfalls aus einem wendeiförmig gewickelten Endlosprofil 5 besteht, wobei hier der Querschnitt des Endlosprofils 5 ein Parallelogramm ist und zwei vollständig im Material liegende Verstärkungseinrichtungen 3 und 4 in dem Endlosprofil 5 vorgesehen sind. Dabei weisen die beiden Verstärkungseinrichtungen 3 und 4 übereinstimmende Querschnittflächen auf.

Die beiden Verstärkungseinrichtungen 3 und 4 sind in benachbarten Ebenen mit einem geringen Abstand zueinander vorgesehen und ihre radialen Projektionen grenzen aneinander an.

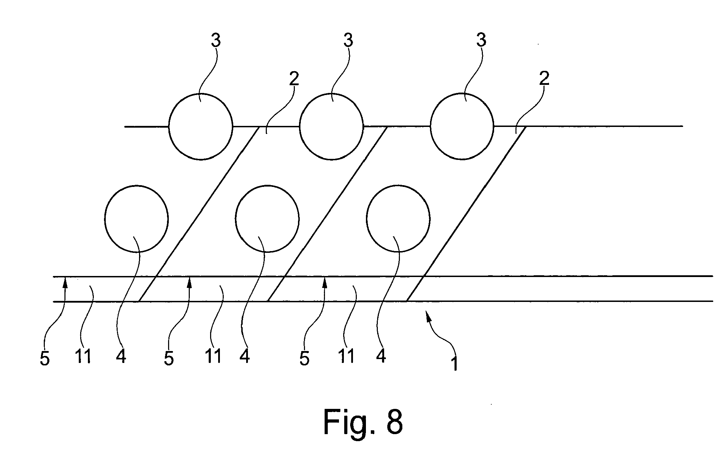

Fig. 8 zeigte eine Abwandlung des Gegenstandes nach Fig. 6, wobei hier die obere Verstärkungseinrichtung 3 teilweise aus dem Material des Schlauchhauptkörpers 2 herausragend vorgesehen ist. In der Zeichnung unterseitig, und damit auf den Schlauch 1 bezogen innenseitig, , ist das Endlosprofil 5, und damit der Schlauch 1, mit einer zusätzlichen Innenlage 11 versehen.

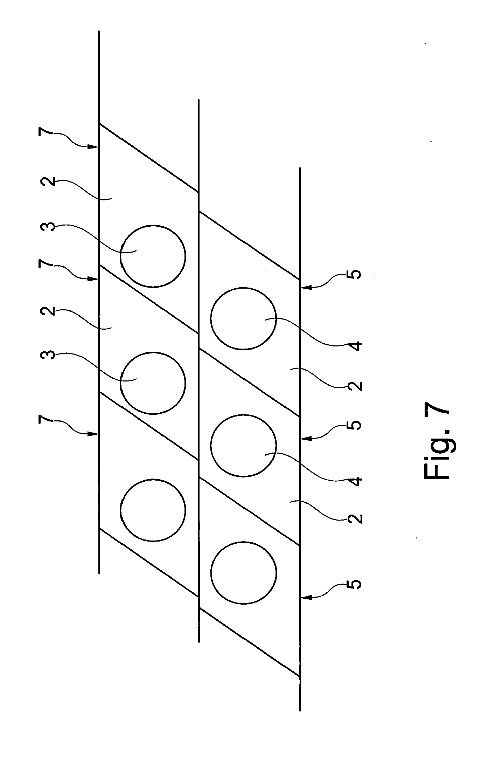

In Fig. 7 ist ein weiteres Ausführungsbeispiel dargestellt, bei dem zwei axial versetzt angeordnete extrudierte Endlosprofile 5 und 7 vorgesehen sind. In dem inneren Endlosprofil 5 sowie dem äußeren Endlosprofil 7 ist jeweils eine vollständig im Material des Schlauchhauptkörpers 2 liegende Verstärkungseinrichtung 4 bzw. 3 vorgesehen, wobei die radialen Projektionen dieser Verstärkungseinrichtungen 3 und 4 direkt aneinander angrenzen und übereinstimmende Querschnittflächen aufweisen.

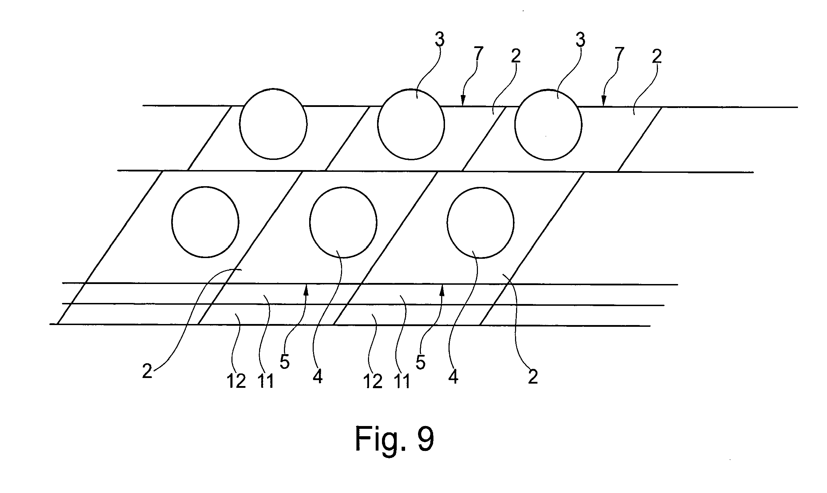

Fig. 9 zeigte eine Abwandlung des Gegenstandes nach Fig. 7, wobei hier die obere Verstärkungseinrichtung 3 teilweise aus dem Material des Schlauchhauptkörpers 2 herausragend vorgesehen ist. In der Zeichnung unterseitig, und damit auf den Schlauch 1 bezogen innenseitig, ist der Schlauchhauptkörper 2 mit zwei radial übereinander vorgesehenen Innenlagen 11 und 12 versehen.

## Patentansprüche

1. Schlauch (1) aus einem Elastomer und/oder Thermoplast, insbesondere Saug- und/oder Druckschlauch, mit einem biegsamen und nachgiebigen Schlauchhauptkörper (2), mit einer ersten schraubenförmig verlaufenden Verstärkungseinrichtung (3), die teilweise oder vollständig in den Schlauchhauptkörper (2) eingebettet ist, **dadurch gekennzeichnet, dass** zumindest eine weitere schraubenförmig verlaufende Verstärkungseinrichtung (4) vorgesehen ist, die teilweise oder vollständig in den Schlauchhauptkörper (2) eingebettet ist, wobei zumindest zwei der vorgesehenen Verstärkungseinrichtungen (3, 4, 6, 8, 9) in unterschiedlichen radialen Ebenen, die einander radial maximal partiell überlagern, angeordnet sind, wobei das Material der Verstärkungseinrichtungen (3, 4, 6, 8, 9) in einem geringeren Maße biegsam und nachgiebig ist als das Material des Schlauchhauptkörpers (2), und wobei jeweils zwei benachbart vorgesehene Verstärkungseinrichtungen (3, 4, 6, 8, 9) derart axial versetzt zueinander angeordnet sind, dass zwischen ihren radialen Projektionen maximal ein axialer Abstand, der geringer ist als der kleinere Durchmesser dieser beiden Verstärkungseinrichtungen (3, 4, 6, 8, 9), verbleibt.

2. Schlauch (1) nach dem vorhergehenden Anspruch, **dadurch gekennzeichnet, dass** jeweils zwei benachbart vorgesehene Verstärkungseinrichtungen (3, 4, 6, 8, 9) derart axial zueinander angeordnet sind, dass zwischen ihren radialen Projektionen kein axialer Abstand verbleibt, insbesondere zumindest eine geringe, jedoch weniger als vollständige, axiale Überlappung der radialen Projektionen gegeben ist.

3. Schlauch (1) nach einem der vorhergehenden Ansprüche, **dadurch gekennzeichnet, dass** zumindest zwei der vorgesehenen Verstärkungseinrichtungen (3, 4, 6, 8, 9) übereinstimmende Querschnittflächen aufweisen.

4. Schlauch (1) nach einem der vorhergehenden Ansprüche, **dadurch gekennzeichnet, dass** zumindest eine Verstärkungseinrichtung (3, 4, 6, 8, 9), insbesondere mehrere oder sämtliche Verstärkungseinrichtungen (3, 4, 6, 8, 9), vollständig im Material des Schlauchhauptkörpers (2) eingeschlossen ist bzw. sind.

5. Schlauch (1) nach einem der vorhergehenden Ansprüche, **dadurch gekennzeichnet, dass** zumindest zwei Verstärkungseinrichtungen (3, 4, 6, 8, 9), insbesondere sämtliche Verstärkungseinrichtungen (3, 4, 6, 8, 9), aus demselben Material bestehen.

6. Schlauch (1) nach einem der vorhergehenden Ansprüche, **dadurch gekennzeichnet, dass** zumindest eine, insbesondere jede Verstärkungseinrichtung (3, 4, 6, 8, 9), aus einem über den Querschnitt einheitlichem Material einstückig ausgebildet ist.

7. Schlauch (1) nach einem der vorhergehenden Ansprüche, **dadurch gekennzeichnet, dass** zumindest eine, insbesondere jede Verstärkungseinrichtung (3, 4, 6, 8, 9), aus Hart-PVC besteht.

8. Schlauch (1) nach einem der vorhergehenden Ansprüche, **dadurch gekennzeichnet, dass** zumindest eine, insbesondere jede Verstärkungseinrichtung (3, 4, 6, 8, 9), eine Härte von ca. 35 bis 90 Shore-D hat.

9. Schlauch (1) nach einem der vorhergehenden Ansprüche, **dadurch gekennzeichnet, dass** der Schlauchhauptkörper (2) eine Härte von ca. 35 bis 98 Shore-A hat.

10. Schlauch (1) nach einem der vorhergehenden Ansprüche, **dadurch gekennzeichnet, dass** zumindest eine, insbesondere jede Verstärkungseinrichtung (3, 4, 6, 8, 9), einen kreisrunden oder einseitig abgeflachten kreisrunden Querschnitt aufweist.

11. Verfahren zur Herstellung eines Schlauches (1) nach einem der vorhergehenden Ansprüche, **dadurch gekennzeichnet, dass** der Schlauch (1) hergestellt wird, indem
- entweder zumindest ein extrudiertes Endlosprofil (5) in heißem Zustand einlagig auf einer rotierenden Welle wendeiförmig aufgewickelt und dann die aneinander anliegenden Bereiche des Endlosprofils (5) entlang ihrer Berührfläche miteinander verschweißt werden, wobei das Endlosprofil (5) zumindest zwei axial verschieden positionierte Verstärkungseinrichtungen (3, 4, 6, 8, 9) aufweist und der Querschnitt des Endlosprofils (5) sowie die Größe und die Lage der Verstärkungseinrichtungen (3, 4, 6, 8, 9) so aufeinander abgestimmt sind, dass zwischen benachbarten radialen Projektionen der Verstärkungseinrichtungen (3, 4, 6, 8, 9) maximal ein axialer Abstand verbleibt, der geringer ist als der kleinere Durchmesser der beiden zugehörigen Verstärkungseinrichtungen (3, 4, 6, 8, 9),
- oder aber zumindest zwei extrudierte Endlosprofile (5, 7, 10), in denen jeweils zumindest eine Verstärkungseinrichtung (3, 4, 6, 8, 9) integriert ist, in heißem Zustand mehrlagig auf einer rotierenden Welle jeweils wendeiförmig aufgewickelt und die aneinander anliegenden Bereiche der Endlosprofile (5, 7, 10) entlang ihrer jeweiligen Berührflächen miteinander verschweißt werden, wobei der jeweilige Querschnitt der Endlosprofile (5, 7, 10) sowie die Größe und die Lage der jeweiligen Verstärkungseinrichtungen (3, 4, 6, 8, 9) so aufeinander abgestimmt sind, dass zwischen benachbarten radialen Projektionen der Verstärkungseinrichtungen (3, 4, 6, 8, 9) maximal ein axialer Abstand verbleibt, der geringer ist als der kleinere Durchmesser der beiden zugehörigen Verstärkungseinrichtungen (3, 4, 6, 8, 9).

12. Verfahren nach dem vorhergehenden Anspruch, **dadurch gekennzeichnet, dass** die Anzahl der Lagen, in denen die extrudierten Endlosprofile (5, 7, 10) in heißem Zustand mehrlagig auf einer rotierenden Welle jeweils wendelförmig aufgewickelt werden, der Anzahl der Endlosprofile (5, 7, 10) entspricht.

13. Verfahren nach einem der Ansprüche 11 oder 12, **dadurch gekennzeichnet, dass** das Endlosprofil (5, 7, 10) bzw. die Endlosprofile (5, 7, 10) von wenigstens einer Lage einen Querschnitt in Form eines seitlich geneigten Parallelogramms aufweist bzw. aufweisen.

14. Verfahren nach einem der Ansprüche 11 bis 13, **dadurch gekennzeichnet, dass** das Endlosprofil (5, 7, 10) bzw. die Endlosprofile (5, 7, 10) nach erfolgtem wendelförmigen Aufwickeln auf der rotierenden Welle durch eine Andruckwalze angedrückt wird bzw. werden.
